# EUROPEAN PATENT APPLICATION

(11) **EP 2 117 093 A1**
(43) Date of publication of application: **11.11.2009**
(21) Application number: 08425325.1
(22) Date of filing: 09.05.2008
(51) Int. Cl.: H02G 3/32

(54) **Attachment system for a support bracket of cable carrier system to a threaded bar anchorable to a ceiling**

(71) Applicant: Bticino S.p.A., 20154 Milano (IT)
(72) Inventor: Garassino, Luca, 15067 Novi Ligure (Alessandria) (IT); Gandini, Paolo, 15065 Frugarolo (Alessandria) (IT)
(74) Representative: Deambrogi, Edgardo

(57) **Abstract**

It is described a system for the attachment to a threaded bar (16) of a support bracket (12) for cable carrier systems having side walls (22) provided, at an attachment end, with facing securing holes (24) adapted to allow the insertion of locking members (38) arranged for securing the bracket (12) to a support structure. The system includes a hanger member (14) having a bottom surface (30) and a pair of side walls (32) transversally arranged relative to the bottom surface (30), having corresponding facing securing holes (34) for the engagement by the above-mentioned locking members (38), wherein the side walls (32) are adapted to be elastically opened for the coupling on a threaded bar (16) section so as to at least partially surround the bar (16) with the bottom surface (30) and the locking means (38), the side walls and the bottom wall having engagement regions (33; 33', 33") contacting the bar (16).

## Description

The present invention relates to the electric ducts field and, specifically, the suspension structures anchorable to a ceiling for supporting brackets or similar supporting profile sections of cable carrier systems, such as, particularly, a suspension structure anchorable to the ceiling of road tunnels.

For the installation of cable carrier systems in industrial ducts, where an abutment of the channels or trays, or the respective support brackets, against the walls of the premises involved is not possible, it is known to manufacture ceiling suspensions through threaded bars which are adapted to support one or more of such brackets.

For supporting heavy loads, it is known to use a portal suspension structure, comprising a pair of bars descendant from the ceiling, adapted to support a beam member therebetween according to a so-called "cradle" configuration.

For supporting lightweight loads, this "cradle" configuration turns out to be bulky and costly, thus a simpler configuration is preferred, which is based on the provision of a single support member for each anchoring point to the load-bearing structure.

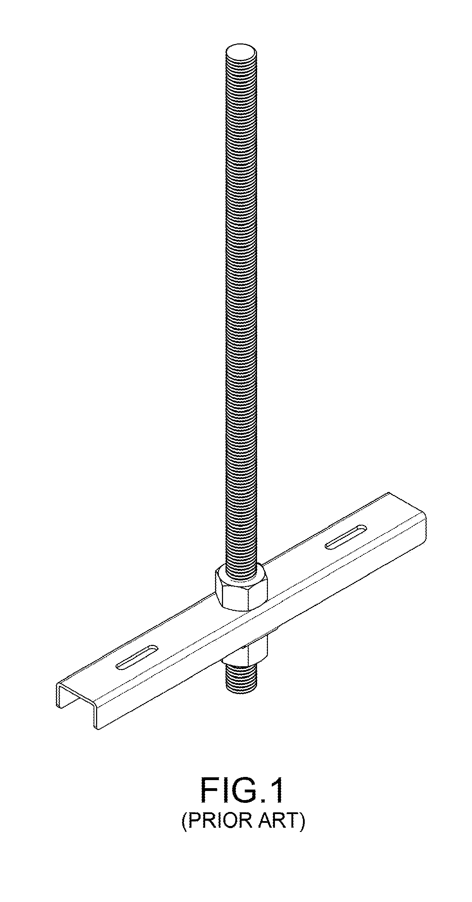

The prior art providing the use of threaded bars is shown in Fig. 1. It is often employed for the manufacture of suspension structures anchorable to the ceiling of tunnels for the road network connection, whether they be pedestrian, road, railway or underground, due to the high manufacture and adaptation ease and inexpensiveness on inclined walls or arched vaults.

The threaded bar can be directly secured to the load-bearing structure by means of a wall drilling operation, inserting of the bar, and subsequent injection of expanding material for the cementing of the manufactured structure in place. The bracket, or similar profile section, acting as a duct support, is then secured at the desired height, as shown in Figure 1, by clamping two nuts and a lock nut. Finally, the bar is cut to measure in order to reduce the encumbrance thereof inferiorly relative to the bracket.

The use of a threaded bar for the anchoring to the load-bearing structure ensures an easy and rapid operation, as well as the system tailoring virtually to a ceiling or wall of any type and shape.

Disadvantageously, such threaded bar suspension system does not allow subsequently adding further brackets, unless removing the preceding one, or adding an extension by interposition of a sleeve acting as a joint, with considerable deterioration of the mechanical performance of the overall system.

Object of the present invention is to provide an attachment system for a support bracket of cable carrier systems to a threaded bar anchorable to a ceiling which is easy, allows flexibility in the installation configuration, particularly the possibility to extend a duct at different desired or designed heights without needing to intervene on the pre-existent supporting arrangements, while ensuring good mechanical characteristics in the flexural strength under load.

According to the present invention, such object is achieved thanks to an attachment system having the characteristics as defined in claim 1.

Particular embodiments are defined in the dependant claims, the content of which is meant as an integral or integrating part of the present description.

Further subject of the invention is a bracket unit comprising a support bracket for cable carrier systems and an associated attachment member of the bracket to a threaded bar, as claimed.

Briefly, the present invention implements an attachment system to a threaded bar for a support bracket provided, on the side walls at the attaching end, with facing securing holes adapted to allow the insertion of locking members (for example, pins or bolts) prearranged for the securing of the bracket to a profile section according to the prior art.

The attachment system which is the subject of the invention reaches the proposed objects through a hanger member, having a bottom surface and a pair of side walls transversally arranged relative to the bottom surface, arranged to be tightly fitted on a threaded bar section and so shaped as to at least partially surround the bar, preferably having positioning and mechanical stop means which allow its locking in the sliding direction (generally vertical) along the bar.

The hanger member which is the subject of the invention is adapted to cooperate with a bracket attachment end and the relative locking members to reach an assembling configuration by overlapping between the side walls thereof and the side walls of the bracket attachment portion, thereby the hanger member and the bracket turn out to be mutually constrained in an horizontal plane.

In the following of the present description, a bracket unit for the support of cable carrier systems is identified as an assembly unit comprising (i) a support bracket, having a resting plane for cable carrier ducts or trays, and a pair of side walls which have, at a bracket attachment end, at least a pair of facing securing holes intended to receive bracket locking means in an installation configuration; and (ii) a separate attachment portion to a load-bearing vertical threaded bar, in the shape of a hanger member, having a bottom surface and a pair of side walls having relative facing securing holes for the engagement by the above-mentioned locking means.

Such a bracket unit is adapted, in the assembled condition, to be projecting mounted to a pre-existent threaded bar in a supporting point at the desired height.

Further characteristics and advantages will be set forth in more detail in the following detailed description, given by way of non-limiting example, with reference to the annexed drawings, wherein:
Fig. 1 is a representation of a ceiling suspension structure by threaded bar according to the prior art;
Figs. 2A and 2B are perspective views, respectively exploded and in the assembled configuration, of a bracket unit provided with an attachment system to a threaded bar according to the invention;
Fig. 2C is a top view of the bracket unit in Figs. 2A and 2B;
Figs. 3A and 3B are perspective views, respectively exploded and in the assembled configuration, of a bracket unit provided with an attachment system to a threaded bar according to the invention, in a second embodiment;
Fig. 3C is a top view of the bracket unit in Figs. 3A and 3B;
Figs. 4A and 4B are perspective views from different angles of a bracket unit provided with an attachment system to a threaded bar according to the invention, in a third embodiment; and
Fig. 4C is a top partial view of the bracket unit in Figs. 4A and 4B.

In the Figures, a bracket unit for the support of cable carrier systems is indicated with 10, comprising a support bracket 12 of a cable carrier duct or tray, and a distinct attachment portion 14 for the connection to a load-bearing vertical threaded bar 16, anchored to a ceiling. By the term ceiling, also any similar load-bearing structures will be meant in the following of the present description, such as sloped walls defining the vault of a building room, or a general installation site, or any structural members arranged at such site, such as, for example, scaffoldings or griders.

Particularly, the system which is the subject of the invention is preferably used for the suspension of cable carrier brackets through a threaded bar anchored to the vault of a road tunnel.

The support bracket 12 is, for example, conventionally obtained by shearing and folding of a plate, and has a resting plane 20 extending along a longitudinal axis, extended with a pair of flanges or side walls 22 which are folded at a right angle along the longitudinal edges, on which, at an attachment end, at least a pair of facing securing holes 24 is drilled, which are intended to receive locking members (for example, pins or bolts) for the securing of the bracket at the desired or provided height in an installation configuration.

Such a bracket is, for example, of the type described in the European patent application No. 1 475 871 A1 for the anchoring to a load-bearing structure, for example a wall, by means of "U"- or "C"-shaped anchoring profile sections intended to be firmly secured to the wall or a similar load-bearing structure by means of small blocks.

The attachment portion 14 is in the form of hanger member, also achievable by shearing and folding of a plate, and has a bottom wall 30 and a pair of transversal side walls 32, preferably slightly wide apart, along which engagement regions 33 with the threaded bar are defined. Relative securing holes 34 are drilled on the side walls 32, which are facing for the engagement by the above-mentioned locking members. Thanks to the structure thereof, the hanger member is elastically deformable by mutual opening of the side walls relative to a rest position which is obtained by conferring to the work piece the desired folding of the plate at the connecting corners between bottom wall and side walls.

The hanger member bottom wall 30 has at least one, and preferably a pair of, rear holes 35, aligned along a wall median axis according to the direction in which the threaded bar to which the member is intended to be coupled comes to be, adapted to receive vertical positioning and stop dowels 36.

Two bolts are indicated with 38 which act as mutual locking members for the parts 12 and 14. Alternatively, but equally efficiently, the locking members can consist in rapid pins, as described in the patent application EP 1 475 871 A1 cited above.

Brackets are shown in the Figures which have a perforated resting plane 20 having, at the free end opposite the attachment end, a pair of notches 40 adapted to keep a duct lid attached, which is temporarily removed for an intervention by an operator, or operative tools available to an operator.

Briefly, in the assembling operation of the bracket unit on a pre-existent threaded bar, the attachment hanger member 14 is first coupled in a forced manner to the threaded bar, at the desired height. This occurs by acting on the hanger member 14 according to a transversal direction interfering with the bar, whereby the hanger member is subjected to an elastic deformation with resulting mutual spreading apart of the side walls and successive return to the rest position in the bar-coupled position. In such condition, the hanger member at least partially surrounds the threaded bar by contacting it at the engagement regions 33. The hanger member 14 is firmly kept in place by acting on the dowels 36, which prevent its downwardly sliding or fall by gravity.

Then, the assembling proceeds with the mounting of the support bracket 12 on the hanger member 14, which occurs by side-by-side arranging and overlapping the bracket side walls with the hanger member 14 side walls, until reaching an abutting position which is determined by the congruent overlapping of the respective securing holes 24 and 34, in order to allow the insertion of the locking members 38 therein, the clamping of which causes the coupling between the components and the firm attachment of the bracket unit to the threaded bar.

Advantageously, the abutting position can coincide with an abutment position of the hanger member 14 side walls against projections or similar projecting parts (such as bumps or convexities) 42 on the inner side of the attachment end side walls for the support bracket 12, or against the bracket resting plane 20.

Finally, the bracket unit is secured to the threaded bar, thus ensuring the stability in place thereof, by tightly clamping the same dowels, which interfere with the bar thread, thus preventing the vertical sliding of the bracket unit.

In detail, the hanger member 14 is adapted, in the assembled condition, to at least partially surround the threaded bar it contacts at predefined engagement regions 33 and the support bracket attachment end is inserted between the walls 32 of the hanger member 14 or, vice versa, the hanger member 14 is inserted between the ends of the support bracket side walls 22. In such a manner, a configuration of partial overlapping between the side walls of the two components is determined, under the action of which they turn out to be mutually constrained in the transversal direction to the bar and bracket.

Preferably, the securing holes 34 which are drilled on the hanger member side walls are obtained at a distance from the bottom wall such that the locking members 38 insertion and the clamping thereof (which may cause the mutual approaching of the hanger member walls) determines the threaded bar entrapment inside the inner space of the hanger member, without noticeable clearance.

Therefore, the assembled condition determines such a configuration of the bracket unit that the components are mutually totally constrained on the horizontal plane, since they fully surround the bar in cooperation, thus preventing any movements in the longitudinal and transversal direction relative to the bracket, thanks to the interposition of the locking members, in the first case, and the mutual mechanical coupling, in the second one.

The so assembled bracket unit is also locked in the vertical direction and rotationally around the bar under the accomplished elastic holding action of the hanger member closed around the bar thanks to the clamping of the locking members, and under the action of the positioning and stop dowels 36.

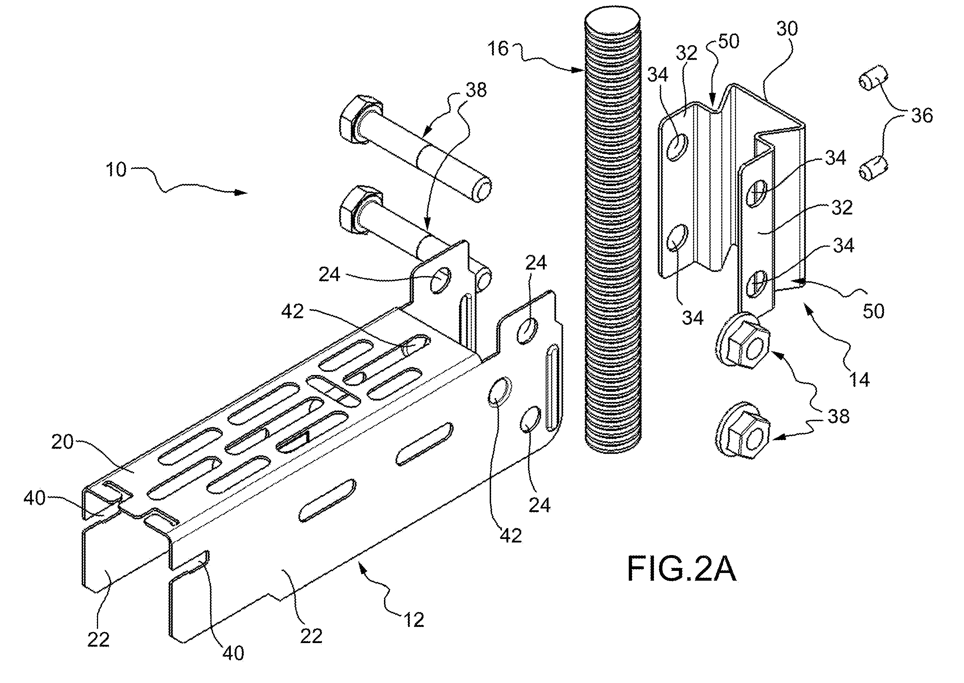

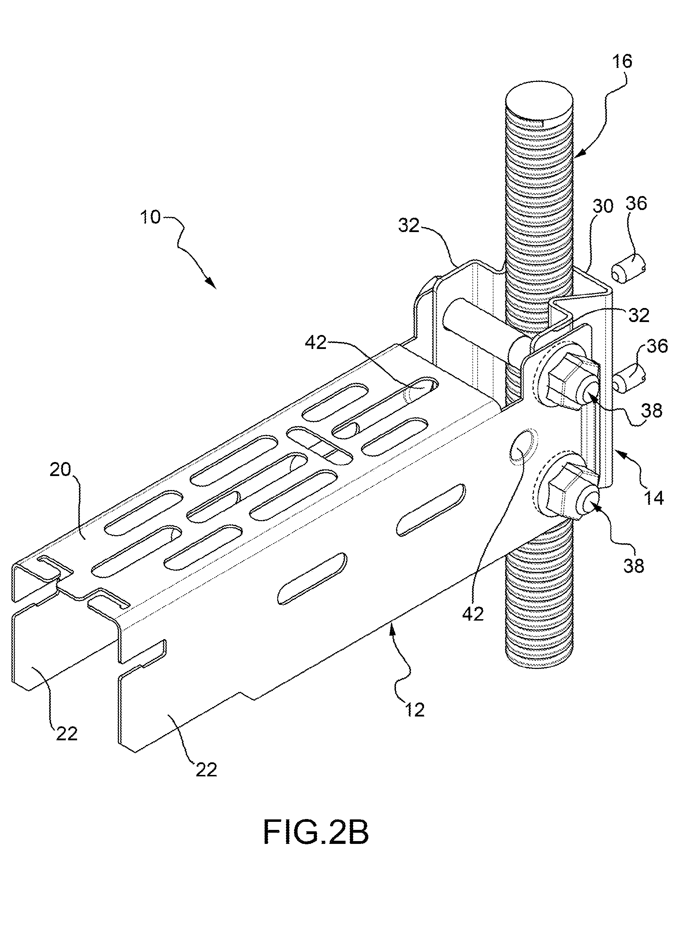

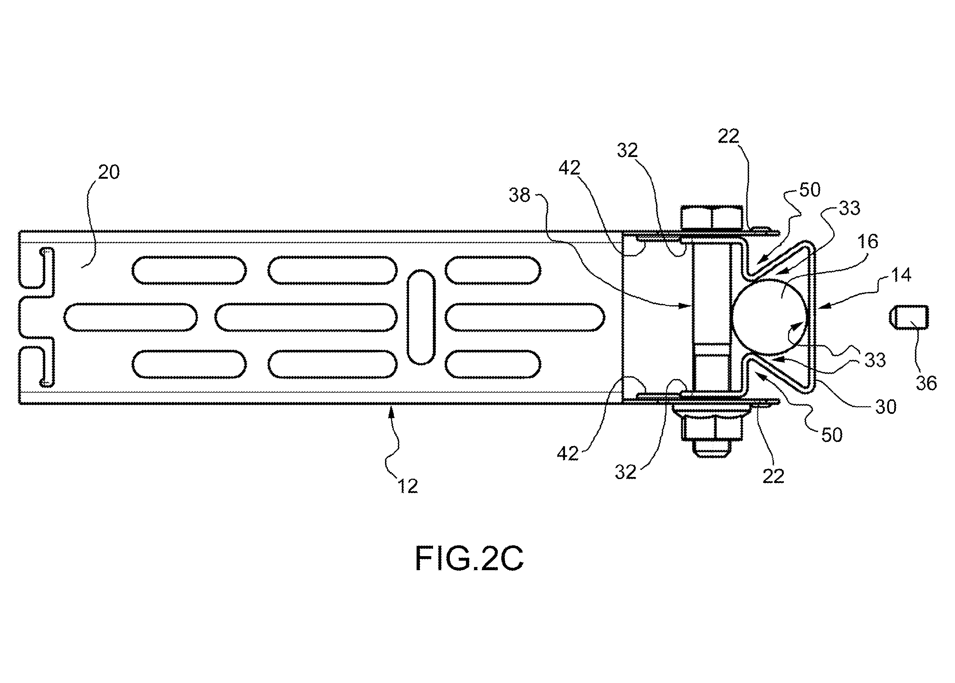

A first embodiment of the invention is illustrated in the Figs. 2A, 2B, and 2C.

Therein, the hanger member 14 has a generally symmetrical shape, in which the side walls 32 define specular undercut portions 50 in the proximity of the junction with the bottom wall 30, which, in shape and depth, are adapted to surround the threaded bar and contact it at respective engagement regions 33 (ideally, vertical contact lines) upstream the convex folding corner, as it is well visible in Fig. 2C. Instead, the respective engagement region 33 on the bottom wall 30 is defined by the same wall midline.

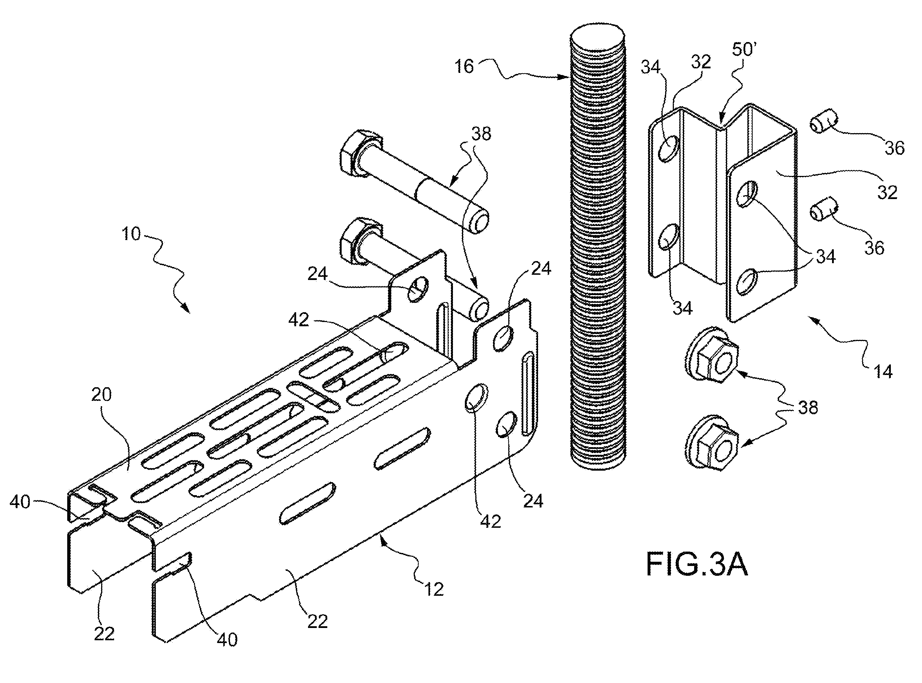

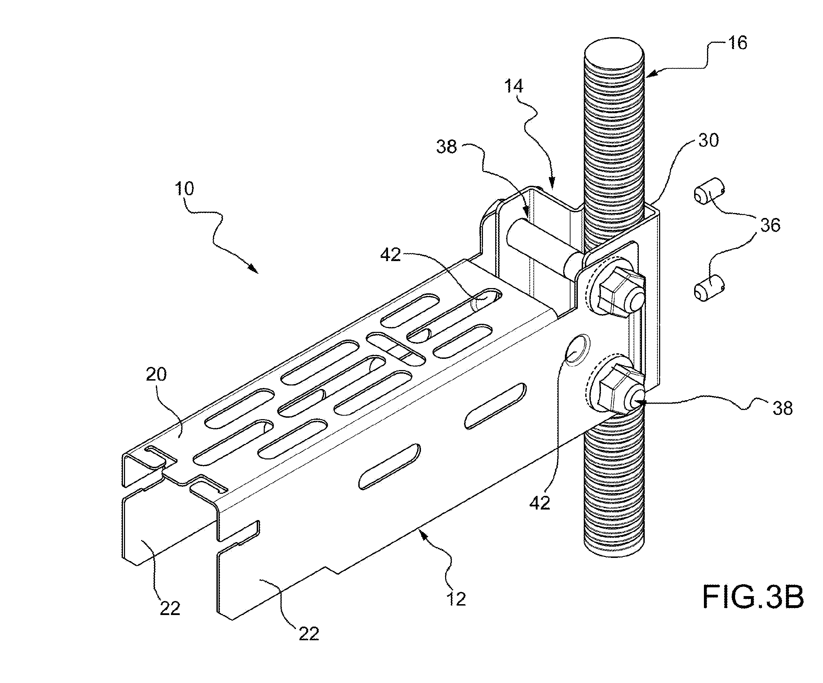

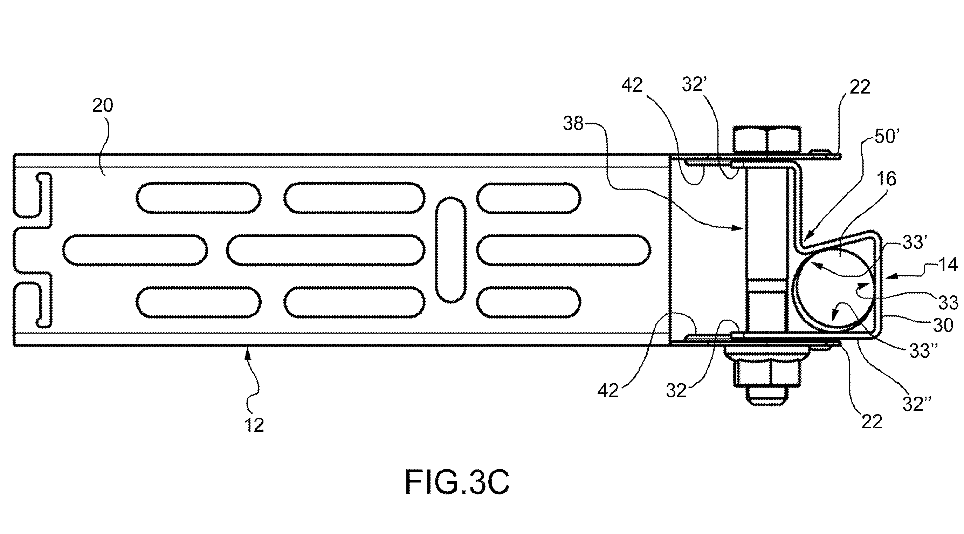

A second embodiment of the invention is illustrated in the Figures 3A, 3B, and 3C.
Therein, the hanger member 14 has an asymmetric shape, in which a side wall 32' defines an undercut portion 50' in the proximity of the junction with the bottom wall 30, which is instead jointed to the opposite side wall 32" by a simple folding corner. The undercut portion 50', in shape and depth, and the side wall 32" opposite portion are adapted to surround the threaded bar and contact it at respective engagement regions 33', 33" (ideally, vertical contact lines), as it is well visible in Fig. 3C. The engagement region 33' along the undercut portion 50' of the first side wall 32' is upstream the convex folding corner, in an advanced position relative to the bottom wall, compared to the engagement region 33" on the wall 32", and the engagement region 33 on the bottom wall 30 is no more defined by the same wall midline, but by a line parallel thereto, and nearer to the folding corner jointing to the wall 32".

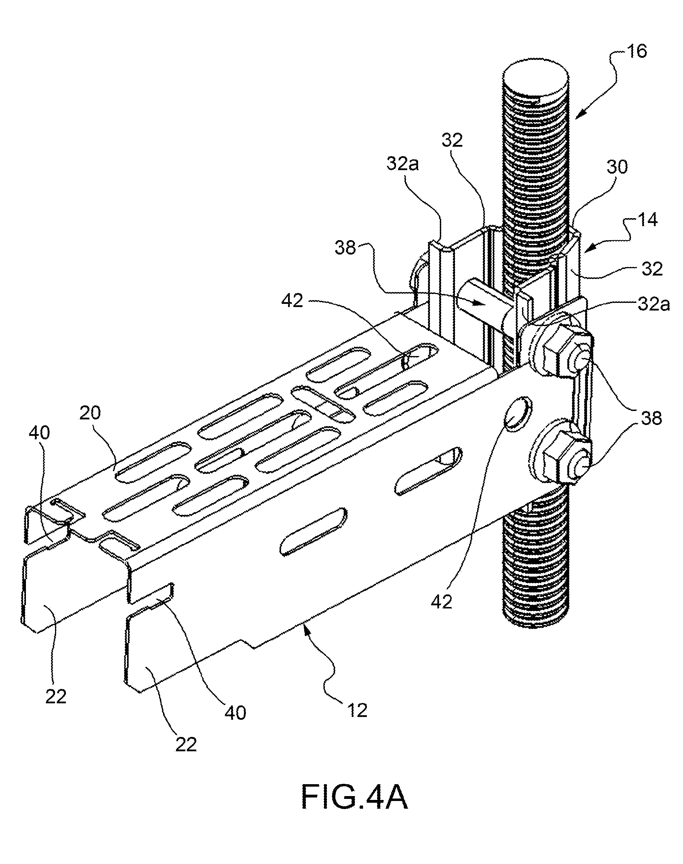

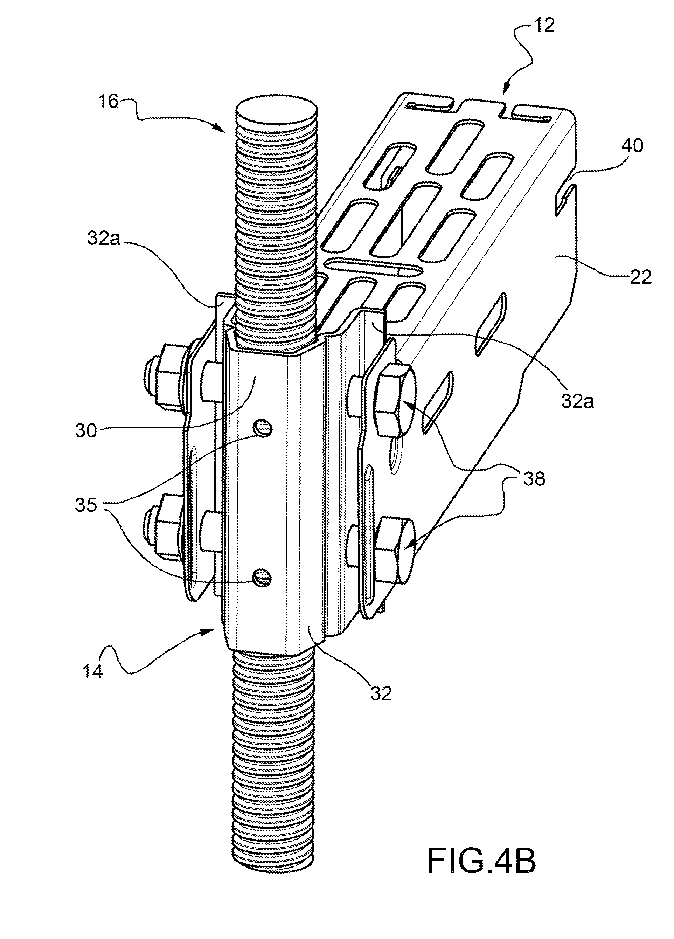

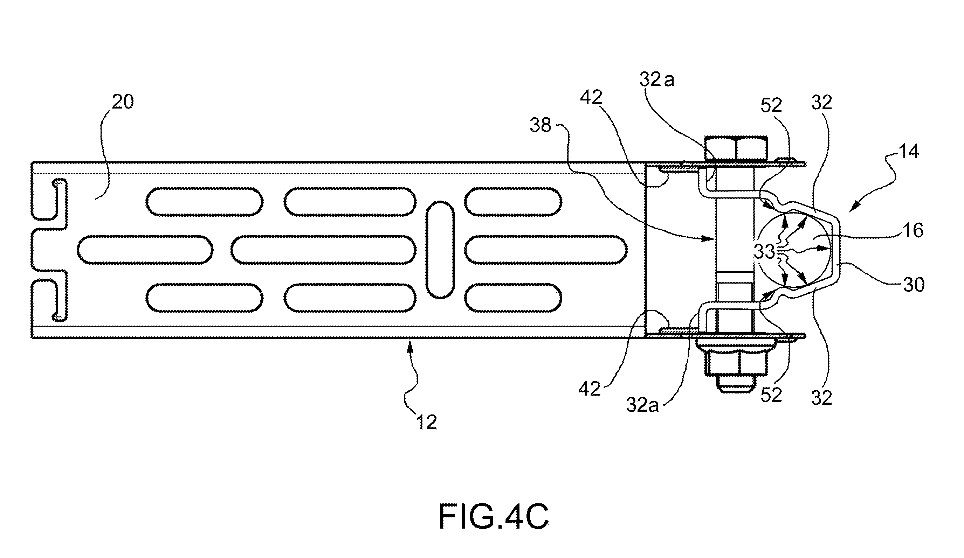

A third embodiment of the invention is illustrated in the Figures 4A, 4B, and 4C.

Therein, the hanger member 14 has a symmetrical shape, the bottom wall 30 being jointed to divergent side walls 32, each of which has, in a intermediate position, a rib, projection, or similar convexity 52 facing the inner space relative to the hanger, essentially extending over the whole height of the wall. Each wall 32 is further provided with a respective end portion 32a which is outwardly folded, so as to turn out to be orthogonal to the bracket walls to be received in a coupling configuration.

In such embodiment, the side walls engagement regions 33 with the threaded bar are defined on the respective ribs 52, and preferably on a length of planar side wall upstream them, and the engagement region 33 on the bottom wall is instead defined by the same wall midline, having the member 14 a symmetrical shape.

It shall be apparent that, being the principle of the invention understood, the embodiments and the implementation details will be able to be widely varied compared to what has been described and illustrated by way of non-limiting example only, without for this departing from the protection scope defined by the annexed claims.

## Claims

1. System for the attachment, to a threaded bar (16), of a support bracket (12) for cable carrier systems, having side walls (22) provided, at an attachment end, with facing securing holes (24) adapted to allow the insertion of locking members (38) arranged for securing the bracket (12) to a support structure, **characterized in that** it includes a hanger member (14) having a bottom surface (30) and a pair of side walls (32) transversally arranged relative to the bottom surface (30), having corresponding facing securing holes (34) for the engagement by the above-mentioned locking members (38), wherein said side walls (32) are adapted to be elastically opened for the coupling on a threaded bar (16) section so as to at least partially surround the bar (16) with the bottom surface (30) and said locking means (38), the side walls and bottom wall having engagement regions (33; 33', 33" contacting said bar (16).

2. The system according to claim 1, further including positioning and mechanical stop means (36) for the hanger member (14) on the threaded bar (16), adapted to allow the locking of said member (14) in the sliding direction along the threaded bar (16).

3. The system according to claim 2, wherein the hanger member (14) bottom wall (30) has at least a hole adapted to receive said positioning means in the form of dowels (36).

4. The system according to any of the preceding claims, wherein said hanger member (14) has a inner volume, comprised between the bottom wall (30), side walls (32), and said locking members (38) inserted into the securing holes (24, 34), which is adapted to receive the threaded bar (16) without clearance.

5. The system according to any of the preceding claims, wherein said hanger member (14) has a symmetrical shape, and the side walls (32) define specular undercut portions (50) on which opposite engagement regions (33) with the threaded bar (16) are defined, an engagement region (33) on the bottom wall (30) being defined by the midline thereof.

6. The system according any of the claims 1 to 4, wherein said hanger member (14) has an asymmetric shape wherein a side wall (32') defines an undercut portion (50') on which a first engagement region (33') with the threaded bar (16) is defined, a second engagement region (33") being defined on the opposite side wall (32") in a rearward position compared to said first engagement region relative to the bottom wall (30), an engagement region (33) on the bottom wall (30) being defined by a line which is parallel to the midline thereof.

7. The system according any of the claims 1 to 4, wherein said hanger member (14) has a symmetrical shape, the bottom wall (30) being jointed to divergent side walls (32), each of which has, in an intermediate position, a projection portion (52) towards the inner space, which defines an engagement region (33) with the threaded bar (16), an engagement region (33) on the bottom wall (30) being defined by the midline thereof.

8. The system according to claim 5, 6, or 7, wherein each hanger member (14) side wall (32) is provided with a respective end portion (32a) outwardly folded in an essentially orthogonal plane to the main plane of said wall (32).

9. Bracket unit (10) for the support of cable carrier systems in industrial ducts, comprising:
- a supporting portion (12) having a resting plane (20) for cable carrier ducts or trays, and a pair of side walls (22) having, at an attachment end, at least a pair of facing securing holes (24) intended to receive locking means (38) of said portion (12) in an installation configuration; and
- a distinct attachment portion to a load-bearing vertical threaded bar (16), including a hanger member (14), having a bottom surface (30) and a pair of side walls (32) transversally arranged relative to the bottom surface (30) and having corresponding facing securing holes (34) for the engagement by said locking means (38), wherein said side walls (32) are adapted to be elastically opened for the coupling on a threaded bar (16) section so as to at least partially surround the bar (16) with the bottom surface (30) and said locking means (38), the side walls and bottom wall having engagement regions (33; 33', 33") contacting said bar (16).
